# EUROPÄISCHE PATENTSCHRIFT

(11) **EP 3 141 585 B1**
(45) Veröffentlichungstag und Bekanntmachung des Hinweises auf die Patenterteilung: **01.10.2025**
(21) Anmeldenummer: 16001796.8
(22) Anmeldetag: 12.08.2016
(51) Int. Cl.: C09C 1/48, C09C 1/50, C09C 1/52

(54) **RUSSGENERATOR MIT MINDESTENS 3 ZULEITUNGEN**
SOOT GENERATOR WITH AT LEAST 3 SUPPLY LINES
GÉNÉRATEUR DE SUIE AVEC AU MOINS 3 LIGNES D'ALIMENTATIONS

(30) Priorität: 10.09.2015 DE 102015011853
(43) Veröffentlichungstag der Anmeldung: 15.03.2017
(73) Patentinhaber: MAN Truck & Bus SE, 80995 München (DE)
(72) Erfinder: Beck, Harald, 90559 Burgthann (DE)
(74) Vertreter: v. Bezold & Partner Patentanwälte - PartG mbB

(56) Entgegenhaltungen:
- EP-B1- 1 055 877
- WO-A1-2005/026616
- WO-A1-2014/085941
- DE-A1- 102011 011 207

## Beschreibung

Die Erfindung betrifft einen Aerosolgenerator, insbesondere einen Rußgenerator, nach dem Oberbegriff des Anspruchs 1. Die Erfindung betrifft ferner ein Verfahren zum Erzeugen eines Aerosols, insbesondere ein Verfahren zum Erzeugen von Ruß.

Zur Reduktion von Partikeln aus dem Motorabgas werden partikelreduzierende Bauteile, wie z. B. Filtersysteme und/oder Katalysatoren, eingesetzt. Die heute eingesetzten Filtersysteme unterscheiden sich im Wesentlichen durch die Art der Regeneration (Abbrennen des Rußes). Dabei bezeichnet man als aktive Regeneration das gezielte zeitlich limitierte Abbrennen des Rußes und als passive Regeneration den kontinuierlichen Abbau von Ruß, idealerweise im dynamischen Gleichgewicht. Zur technischen Überprüfung der Filtereffizienz bzw. der Reaktivität von Rußen werden Modellruße und Realruße verwendet. Für die Überprüfung der gesetzlich limitierten Partikelemission werden derzeit verschiedene Partikelmesstechniken verwendet, die die Partikelmasse und die Partikelanzahl bestimmen. Zur Validierung, Eichung und Kalibrierung dieser Partikelmesstechniken werden derzeit keine standardisierten Partikelaerosole verwendet.

Zur Herstellung von Rußpartikeln werden aktuell neben Verbrennungskraftmaschinen verschiedene Rußgeneratoren verwendet.

Die Druckschrift EP 0 353 746 A2 beschreibt eine Vorrichtung, die Rußpartikel durch Funkenentladung an Graphitelektroden beschreibt. Die Patentschrift US 4 751 069 A beschreibt ein System zur Erstellung von Rußpartikeln durch Cracken von kohlenstoffhaltigen Materialien bei hohen Temperaturen. Die Patentschrift EP 1 055 877 B1 beschreibt einen Brenner zur Erzeugung von Rußpartikeln, der in einer Brennkammer ein Brenngas und ein Oxidationsgas verbrennt. Eine Verfeinerung dieses Brenners ist in EP 1 590 408 B1 beschrieben. Eine weitere Verfeinerung ist in WO 2014/085941 A1 beschrieben, die die Verwendung eines flüssigen Brennstoffs zur Erzeugung von Rußpartikeln beschreibt.

Dokument DE 10 2011 011 207 A1 offenbart einen Brenner für einen Ofen umfassend eine erste Zuführung für zumindest einen Brennstoff, eine die erste Zuführung umgebende zweite Zuführung und eine die zweite Zuführung umgebende dritte Zuführung, wobei über die zweite und dritte Zuführung Oxidationsmittel zugeführt werden.

Dokument WO 2005/026616 A1 offenbart ein Verfahren für die thermische Abgasreinigung, wobei die Abgase einem in einer geschlossenen Brennkammer befindlichen und mit Brenngas sowie einem sauerstoffhaltigen Reaktionspartner (Brennluft) betriebenen Brenner zugeführt und die toxischen Substanzen der Abgase durch das mit hoher Temperatur brennende Gemisch von Brenngas und Brennluft verbrannt oder thermisch zersetzt werden.

Nachteilig an den bekannten Vorrichtungen ist, dass die chemische Zusammensetzung der Partikel sowie die Partikelmorphologie, d. h. die Größe und Beschaffenheit der erzeugten Partikel des Aerosols, nicht oder zumindest nur in begrenztem Maße beinflussbar sind.

Es ist somit eine Aufgabe der Erfindung, eine verbesserte Vorrichtung zur Erzeugung von Modellaerosolen, insbesondere von Ruß, bereitzustellen, mit der Nachteile herkömmlicher Techniken vermieden werden können. Die Aufgabe der Erfindung ist es insbesondere, einen Aerosolgenerator, insbesondere einen Rußgenerator, bereitzustellen, der es ermöglicht, einen direkten Einfluss auf die chemische Zusammensetzung und/oder Morphologie der erzeugten Partikel auszuüben. Eine weitere Aufgabe ist es, ein Verfahren zum Erzeugen eines Aerosols bzw. Ruß bereitzustellen, mit dem Nachteile herkömmlicher Verfahren vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung werden die genannten Aufgaben durch einen Aerosolgenerator, insbesondere einen Rußgenerator, gelöst, der eine Brennkammer, in welcher Brennstoff mit einem Oxidationsmittel in mindestens einer Rußpartikel erzeugenden Flamme verbrennbar ist, und eine Fluidzufuhreinrichtung zur Zufuhr von Brennstoff und einem Oxidationsmittel in die Brennkammer umfasst.

Die Fluidzufuhreinrichtung zeichnet sich dadurch aus, dass die Fluidzufuhreinrichtung mindestens drei Zufuhrleitungen für ein Fluid aufweist, deren auslassseitige Endabschnitte parallel verlaufen, so dass mindestens drei verschiedenartige Fluide, insbesondere Gase, unvermischt und in paralleler Einströmrichtung in die Brennkammer einleitbar sind. Die Fluide, insbesondere Gase, werden somit separat in die Brennkammer und zur Flamme geleitet. Die Einströmrichtung ist die mittlere Strömungsrichtung des am Auslass der Zufuhrleitung ausströmenden und in die Brennkammer eintretenden Fluidstromes.

Diese Anordnung der Zufuhrleitungen bietet den Vorzug, dass mehrere verschiedenartige Brenngase und/oder Oxidationsgase und/oder Inertgase in eine Brennkammer geleitet werden können. Die Kombination aus mindestens drei Zufuhrleitungen und paralleler Einströmrichtung ermöglicht eine flexible Kombination und Zusammensetzung der Komponenten des in der Flamme verbrennbaren Gasgemisches, um eine gewünschte Partikelmorphologie und/oder chemische Zusammensetzung der Partikel zu bewirken.

Gemäß einer bevorzugten Ausgestaltungsform können die Endabschnitte der mindestens drei Zufuhrleitungen koaxial ineinander angeordnet sein. Mit anderen Worten weisen die Endabschnitte gemäß dieser Ausgestaltungsform unterschiedlich große Durchmesser auf und sind koaxial ineinander verschachtelt angeordnet. Dies ermöglicht eine kompakte Anordnung der Endabschnitte der Zufuhrleitungen, um die unterschiedlichen Gase möglichst an der gleichen Stelle, bzw. an der Stelle, an der die Flamme erzeugt wird, in den Brennraum einzuleiten.

Gemäße einer alternativen Ausgestaltungsform können die Endabschnitte parallel nebeneinanderliegend angeordnet sein. Diese Ausgestaltungsform ist insbesondere bei einer großen Anzahl von Zufuhrleitungen mit geringem Aufwand herstellbar. Bei einer vorteilhaften Variante dieser Ausgestaltungsform sind die Endabschnitte parallel nebeneinander unter Ausbildung einer Leitungsanordnung mit einer größtmöglichen Packungsdichte angeordnet.

Gemäß einer bevorzugten Ausgestaltungsform weist die Fluidzufuhreinrichtung mindestens vier Zufuhrleitungen auf. Gemäß dieser Variante können beispielsweise mindestens zwei unterschiedliche Brenngase, ein Oxidationsgas und ein weiteres Inertgas oder Reaktivgas in die Brennkammer eingeleitet werden. Ein Reaktivgas ist ein Gas mit sog. Heteroatomen (Nichtkohlenstoffatomen), wie z. B. Stickstoff, Schwefel oder anderen Elementen. Diese Reaktivgase können aufgrund ihrer Beschaffenheit als Oxidationsmittel (z. B. S02, N02) oder als Reduktionsmittel (z. B. NH3, H2S, N2O) wirken. Eine Variante dieser Ausgestaltungsform sieht daher vor, dass die Fluidzufuhreinrichtung vier oder mehr Zufuhrleitungen aufweist.

Eine weitere vorteilhafte Variante dieser Ausgestaltungsform sieht vor, dass die Fluidzufuhreinrichtung sieben Zufuhrleitungen aufweist. Diese Variante bietet eine noch größere Flexibilität, die Zusammensetzung des in der Flamme verbrannten Gasgemisches einzustellen. Ein weiterer Vorzug ist, dass bei sieben Zufuhrleitungen deren sieben parallele Endabschnitte mit einer größtmöglichen Packungsdichte angeordnet werden können. Hierzu sind die Endabschnitte parallel nebeneinander angeordnet, wobei einer der Endabschnitte mittig angeordnet ist, während die sechs verbleibenden Endabschnitte umfangsseitig gleichmäßig verteilt und mit möglichst geringem Abstand zu dem mittig angeordneten Endabschnitt angeordnet sind.

Es ist ferner besonders vorteilhaft, wenn sich die Auslässe der Zufuhrleitungen in Bezug auf die Einströmrichtung auf gleicher Höhe befinden, so dass die Gase möglichst nahe zueinander in den Brennraum eingeleitet werden und sich möglichst gleichzeitig vermischen.

Erfindungsgemäß ist eine erste der Zufuhrleitungen einlassseitig mit einem ersten Fluidbehälter (Brennstoffbehälter), enthaltend einen ersten Brennstoff, verbunden. Ferner ist eine zweite der Zufuhrleitungen einlassseitig mit einem zweiten Fluidbehälter (Brennstoffbehälter), enthaltend einen zweiten Brennstoff, verbunden. Der erste Brennstoff kann ein erstes Brenngas und der zweite Brennstoff ein zweites, vom ersten Brenngas unterschiedliches Brenngas sein. Beispiele für derartige Brenngase sind Wasserstoff (H2), Propan (C3H8) oder Ethin bzw. Acetylen (C2H2).

Eine weitere vorteilhafte Möglichkeit einer erfindungsgemäßen Realisierung sieht vor, dass eine dritte der Zufuhrleitungen einlassseitig mit einem dritten Fluidbehälter, enthaltend ein Oxidationsgas, verbunden ist. Ebenfalls möglich ist die Verwendung von einem oder mehreren Oxidationsgasen mit unterschiedlichen Sauerstoffanteilen, beispielsweise Luft, Sauerstoff oder Ozon, die über jeweils separate Zufuhrleitungen in die Brennkammer geleitet werden. Gemäß dieser Variante sind dann mindestens zwei Zufuhrleitungen der Fluidzufuhreinrichtung einlassseitig mit jeweils einem Behälter verbunden, der ein Oxidationsgas enthält, wobei in den Behältern unterschiedliche Oxidationsgase gespeichert sind.

Ferner kann mindestens eine der Zufuhrleitungen einlassseitig mit einem Fluidbehälter verbunden sein, der ein Reaktivgas enthält. Auf diese Weise können eine oder mehrere unterschiedliche Reaktivgase in die Brennkammer eingeleitet werden.

Ferner kann der Aerosolgenerator so ausgebildet sein, dass mindestens eine der Zufuhrleitungen einlassseitig mit einem Fluidbehälter verbunden ist, der ein sog. Inertgas enthält. Inertgase zeichnen sich dadurch aus, dass sie nicht unmittelbar an der Verbrennung teilnehmen. Mögliche Inertgase sind z. B. N2, CO2 oder Edelgase. Auf diese Weise können eine oder mehrere unterschiedliche Inertgase in die Brennkammer eingeleitet werden, um die physikalisch chemischen Randbedingungen der Verbrennung und damit einhergehend die Partikelmorphologie zu beeinflussen.

Ferner kann der Aerosolgenerator Reguliermittel aufweisen, mittels derer eine Fluiddurchflussrate in jeder der Zufuhrleitungen einstellbar ist. Das Reguliermittel kann beispielsweise eine Ventilanordnung sein, dergestalt, dass jede Zufuhrleitung mindestens ein Ventil aufweist, mittels dessen eine Durchflussrate durch die Zufuhrleitung einstellbar ist. Auf diese Weise kann das Mischungsverhältnis der zugeleiteten Gase variiert werden und darüber ein direkter Einfluss auf die Morphologie (Größe und Beschaffenheit) der generierten Partikel sowie auf die chemische Zusammensetzung der Partikel ausgeübt werden.

So führt beispielsweise die Erhöhung des Acetylenanteils im Brenngasgemisch zu einem höheren Kohlenstoffanteil im Brenngas und somit zu einer stärkeren Rußbildung in der Flamme. Eine Erhöhung des Wasserstoffanteils führt zu einem höheren Kohlenwasserstoffanteil in den gebildeten Partikeln. Die Verwendung von reinem Wasserstoff führt zu einer rußfreien Flamme. In diesem Fall kann die Partikelemission beispielsweise durch andere reaktive oder inerte Gasanteile verursacht werden, z. B. schwefelhaltige Partikel durch Anwendung von S02 und/oder H2S.

Gemäß einem zweiten Gesichtspunkt der Erfindung wird ein Verfahren zum Erzeugen eines Aerosols, insbesondere ein Verfahren zum Erzeugen von Ruß, bereitgestellt, bei dem mittels eines Aerosolgenerators, wie in diesem Dokument offenbart, mindestens ein Brennstoff und ein Oxidationsmittel einem Brennraum zugeführt werden und im Brennraum eine Rußpartikel erzeugenden Flamme, insbesondere eine Diffusionsflamme, gebildet wird.

Eine vorteilhafte Variante sieht hierbei vor, dass mittels eines Aerosolgenerators mit mindestens vier Zufuhrleitungen mindestens zwei Brenngase, mindestens ein Oxidationsgas und mindestens ein Reaktivgas oder Inertgas in den Brennraum eingeleitet werden.

Die Erfindung betrifft ferner ein Verfahren zum Überprüfen oder Eichen eines Partikelmessgeräts, Partikelsensors, Partikelfilters oder Partikelkatalysators, dadurch gekennzeichnet, dass zum Überprüfen oder Eichen einer solchen Vorrichtung dieser ein Aerosol, insbesondere Rußpartikel, zugeführt werden, welche mittels eines Aerosolgenerators, wie in diesem Dokument offenbart, oder mittels eines Verfahrens, wie in diesem Dokument offenbart, erzeugt sind.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Rußgenerators gemäß einer Ausführungsform der Erfindung;
- Figur 2A und 2B: eine Schnittansicht eines auslassseitigen Endabschnitts der Fluidzufuhreinrichtung gemäß einer weiteren Ausführungsform der Erfindung; und
- Figur 3: eine Schnittansicht eines auslassseitigen Endabschnitts der Fluidzufuhreinrichtung gemäß einer weiteren Ausführungsform der Erfindung.

Gleiche oder funktional äquivalente Elemente sind in allen Figuren mit denselben Bezugszeichen bezeichnet.

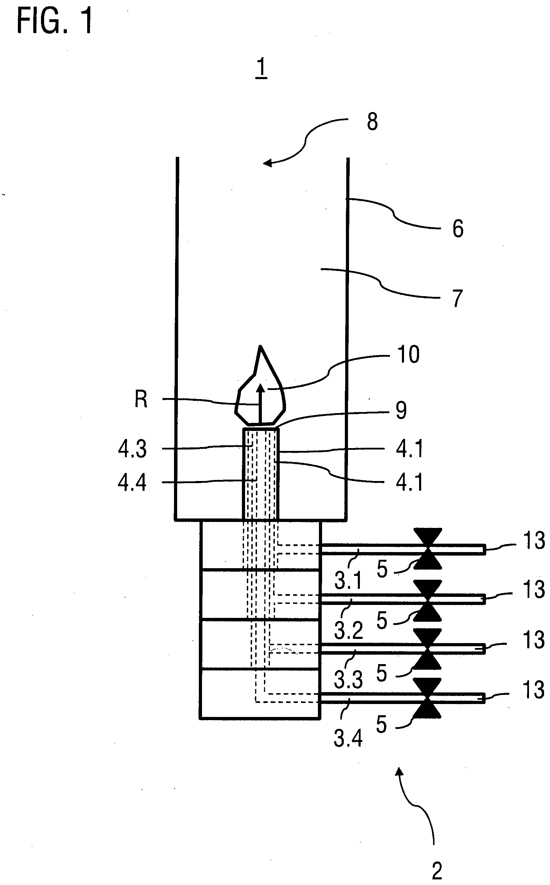

Figur 1 zeigt schematisch einen Querschnitt eines Ausführungsbeispiels 1 des erfindungsgemäßen Rußgenerators.

Der in Figur 1 dargestellte Rußgenerator umfasst eine Brennkammer 7, in welcher mindestens ein Brennstoff mit einem Oxidationsmittel in mindestens einer Rußpartikel erzeugenden Flamme 10 verbrennbar ist. Die Brennkammer 7 kann in an sich bekannter Weise ausgeführt sein und beispielsweise durch ein zylindrisches Außenrohr 6 gebildet sein, an dessen unterem Ende ein Endabschnitt einer Fluidzufuhreinrichtung 2 in die Brennkammer 7 hineinragt.

Über die Fluidzufuhreinrichtung 2 können Brenngase, ein Oxidationsgas und ggfs. weitere Gase wie ein Reaktivgas oder Inertgas in die Brennkammer eingeleitet werden.

Die Fluidzufuhreinrichtung hat in dem gezeigten Beispiel vier Zufuhrleitungen 3.1, 3.2, 3.3 und 3.4. Es wird jedoch betont, dass die Fluidzufuhreinrichtung auch eine größere Anzahl n von Zufuhrleitungen aufweisen kann.

Die auslassseitigen Endabschnitte 4.1, 4.2, 4.3 und 4.4 der Zufuhrleitungen 3.1, 3.2, 3.3 und 3.4 verlaufen parallel, wobei sich die Auslässe 9 der Zufuhrleitungen in Bezug auf die Einströmrichtung R auf gleicher Höhe befinden. Auf diese Weise können im gezeigten Ausführungsbeispiel vier verschiedenartige Gase separat und in paralleler Einströmrichtung in die Brennkammer 7 eingeleitet werden. Die Einströmrichtung der aus den Auslässen 9 der Zufuhrleitungen austretenden Gase ist durch den mit dem Bezugszeichen R gekennzeichneten Pfeil gekennzeichnet.

Die Endabschnitte 4.1, 4.2, 4.3 und 4.4 der Zufuhrleitungen 3.1, 3.2, 3.3 und 3.4 sind koaxial ineinander verschachtelt angeordnet, was durch die gestrichelten Linien in Figur 1 dargestellt ist. Die Zufuhrleitung 3.4 geht beispielsweise in einen zylindrischen Innenrohrabschnitt 4.4 über, welcher koaxial und im Innern des Rohrabschnitts 4.3 der Zufuhrleitung 3.3 verläuft. Die Zufuhrleitung 3.2 geht in ein Rohrabschnitt 4.2 über, in dessen Innern der Rohrabschnitt 4.3 verläuft. Die Zufuhrleitung 3.1 geht in einen äußeren Rohrabschnitt 4.1 über, in dessen Innern der Rohrabschnitt 4.2 verläuft.

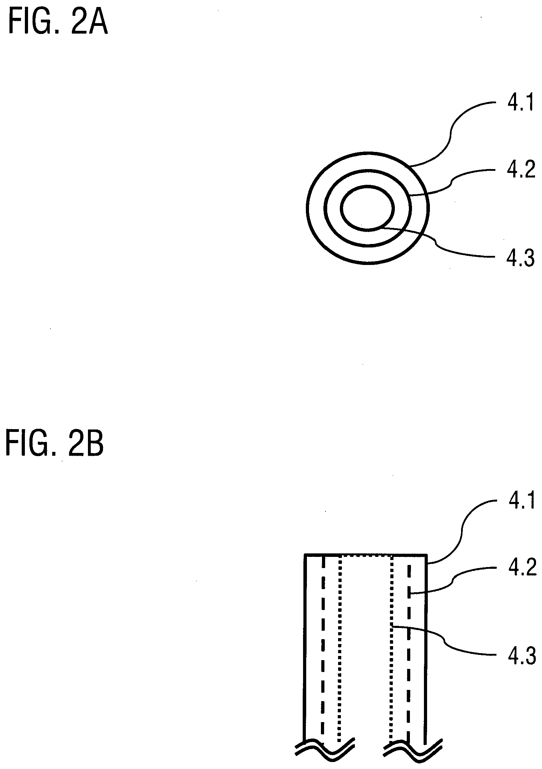

Eine solche koaxial ineinander verschachtelte Anordnung der Endabschnitte der Zufuhrleitungen ist in den Figuren 2A und 2B nochmals illustriert, jedoch für ein Ausführungsbeispiel mit drei Zufuhrleitungen. Figur 2A zeigt dabei eine Draufsicht auf die Auslässe 9 der Endabschnitte 4.1, 4.2 und 4.3, während Figur 2B eine Schnittansicht längs der Strömungsrichtung zeigt.

Der Einlass 13 einer der Zufuhrleitungen ist mit einem (nicht dargestellten) Fluidbehälter verbunden, in dem ein Oxidationsmittel gespeichert ist, so dass ein darin gespeichertes Oxidationsmittel mit einer bestimmten Zuflussrate durch den Auslass 9 des entsprechenden Endabschnitts in die Brennkammer 7 geleitet werden kann. Die Zuflussrate kann über ein Ventil 5 eingestellt werden.

Entsprechend sind die Einlässe 13 von zwei weiteren der Zufuhrleitungen jeweils mit unterschiedlichen Brennstoffbehältern verbunden, wobei in den Brennstoffbehältern unterschiedliche Brenngase gespeichert sind. Auf diese Weise können zwei unterschiedliche Brenngase in die Brennkammer 7 geleitet werden kann. Die Zuflussrate in jeder Zufuhrleitung kann wiederum über ein Ventil 5 eingestellt werden.

Der Einlass der vierten Zufuhrleitung ist mit einem (nicht dargestellten) Fluidbehälter verbindbar bzw. verbunden, in dem ein Reaktivgas oder ein Inertgas gespeichert ist, so dass ein Reaktivgas oder Inertgas mit einer bestimmten Zuflussrate durch den Auslass 9 des entsprechenden Endabschnitts in die Brennkammer 7 geleitet werden. Die Zuflussrate kann wiederum über ein Ventil 5 eingestellt werden.

Die Fluid- bzw. Brennstoffbehälter können z. B. jeweils eine Gasflasche sein, in welcher ein Gas unter Überdruck gespeichert ist. Zur Regulation der Zuflussrate können die Ventile 5 als Reduzierventile ausgeführt sein.

Nach der Zündung bildet sich über den Auslässen 9 der Zufuhrleitungen 3.1 bis 3.4 eine Flamme 10 aus, in welcher durch Verbrennung des Brennstoffs mit dem Oxidationsgas Rußpartikel gebildet werden.

Durch Einstellung der Zuflussraten über die Ventile 5 kann das Mischungsverhältnis der zugeleiteten Gase variiert werden und somit ein direkter Einfluss auf die Morphologie (Größe und Beschaffenheit) der generierten Partikel sowie auf die chemische Zusammensetzung der Partikel ausgeübt werden. Somit können die Verbrennung und damit die Partikelbildung beeinflussende Faktoren unabhängig voneinander variiert werden. Ist eines der zugeführten Brenngase Acetylen, so führt beispielsweise die Erhöhung des Acetylenanteils im Brenngasgemisch zu einem höheren Kohlenstoffanteil im Brenngas und somit zu einer stärkeren Rußbildung in der Flamme. Ist eines der zugeführten Brenngase Wasserstoff, so führt eine Erhöhung des Wasserstoffanteils zu einem höheren Kohlenwasserstoffanteil in den gebildeten Partikeln. Die Verwendung von reinem Wasserstoff führt zu einer rußfreien Flamme. In diesem Fall kann die Partikelemission beispielsweise durch andere reaktive oder inerte Gasanteile verursacht werden, z. B. schwefelhaltige Partikel durch Anwendung von S02 und/oder Das obere Ende 8 der Brennkammer kann in an sich bekannter Weise ausgeführt sein. Beispielsweise kann eine Aerosol- bzw. Rußwegführleitung (nicht dargestellt) mit einer Einmündung in den Brennraum, durch welche hindurch im Brennraum gebildete Rußpartikel und/oder Aerosole wegführbar ist, vorgesehen sein.

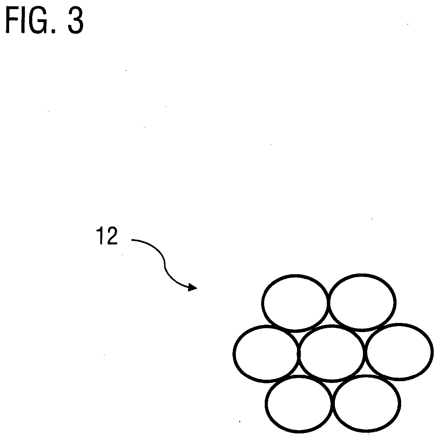

Figur 3 illustriert eine weitere Ausführungsvariante der Zufuhreinrichtung, wobei eine Draufsicht auf die Auslässe 9 des in die Brennkammer mündenden Endabschnitts der Zufuhreinrichtung gezeigt ist. Wie in Figur 3 erkennbar, liegt eine Besonderheit dieser Ausführungsvariante darin, dass die Zufuhreinrichtung sieben separate Zufuhrleitungen aufweist, deren Endabschnitte parallel nebeneinander unter Ausbildung einer Leitungsanordnung 12 mit einer größtmöglichen Packungsdichte angeordnet sind. Hierzu sind die Endabschnitte parallel nebeneinander angeordnet, wobei einer der Endabschnitt mittig angeordnet ist, während die sechs verbleibenden Endabschnitte umfangsseitig gleichmäßig verteilt und mit möglichst geringem Abstand zu dem mittig angeordneten Endabschnitt angeordnet sind.

Mögliche Anwendungen der Partikel bzw. der Aerosole bestehen in einer Validierung, Kalibrierung und/oder Eichung von Partikelmessgeräten und Partikelsensoren sowie zur Überprüfung und Bewertung von Filtern und Katalysatoren. Durch Einbringen entsprechender chemischer Komponenten kann das generierte Aerosol auch zur Alterung von Sensoren, Katalysatoren und Filtern verwendet werden. Die Verwendung der Aerosole zur Messung der Reaktionskinetik ermöglicht die Entwicklung von deskriptiven und/oder prädiktiven Simulationsmodellen. Ebenfalls sind Kinetikuntersuchungen von Modellaerosolen für die Funktionsentwicklung zur Optimierung von Filterbeladungsmodellen und Regenerationsstrategien grundlegend.

### Bezugszeichenliste

- 1: Rußgenerator
- 2: Fluidzufuhreinrichtung
- 3.1 - 3.4: Zufuhrleitung
- 4.1 - 4.4: Endabschnitt der Zufuhrleitung
- 5: Ventil
- 6: Außenrohr
- 7: Brennkammer
- 8: Oberes Ende der Brennkammer
- 9: Auslass der Zufuhrleitungen
- 10: Flamme
- 12: Parallel gepackte Leitungsanordnung
- 13: Einlass der Zufuhrleitung
- R: Einströmrichtung

## Patentansprüche

1. Aerosolgenerator, insbesondere Rußgenerator, umfassend
eine Brennkammer, in welcher Brennstoff mit einem Oxidationsmittel in mindestens einer Rußpartikel erzeugenden Flamme verbrennbar ist;
einer Fluidzufuhreinrichtung zur Zufuhr von Brennstoff und einem Oxidationsmittel in die Brennkammer ,wobei die Fluidzufuhreinrichtung mindestens drei Zufuhrleitungen aufweist, deren Endabschnitte parallel verlaufen, so dass mindestens drei verschiedenartige Fluide, insbesondere Gase, unvermischt und in paralleler Einströmrichtung in die Brennkammer einleitbar sind, wobei eine erste der Zufuhrleitungen einlassseitig mit einem ersten Fluidbehälter, enthaltend einen ersten Brennstoff, insbesondere ein erstes Brenngas, verbunden ist; und
**dadurch gekennzeichnet, dass** eine zweite der Zufuhrleitungen einlassseitig mit einem zweiten Fluidbehälter, enthaltend einen zweiten Brennstoff, insbesondere ein zweites Brenngas, verbunden ist.

2. Aerosolgenerator nach Anspruch 1, **dadurch gekennzeichnet, dass** die Endabschnitte mindestens drei Zufuhrleitungen koaxial ineinander angeordnet sind

3. Aerosolgenerator nach Anspruch 1, **dadurch gekennzeichnet,**
a) **dass** die Endabschnitte parallel nebeneinanderliegend angeordnet sind; und/oder
b) **dass** die Endabschnitte parallel nebeneinander unter Ausbildung einer Leitungsanordnung mit einer größtmöglichen Packungsdichte angeordnet sind.

4. Aerosolgenerator nach einem der vorhergehenden Ansprüche, **dadurch gekennzeichnet,**
a) **dass** die Fluidzufuhreinrichtung mindestens vier Zufuhrleitungen aufweist; oder
b) **dass** die Fluidzufuhreinrichtung vier Zufuhrleitungen aufweist; oder
c) **dass** die Fluidzufuhreinrichtung sieben Zufuhrleitungen aufweist.

5. Aerosolgenerator nach einem der vorhergehenden Ansprüche, **dadurch gekennzeichnet, dass** sich die Auslässe der Zufuhrleitung auf in Bezug auf die Einströmungsrichtung auf gleicher Höhe befinden.

6. Aerosolgenerator nach einem der vorhergehenden Ansprüche, **dadurch gekennzeichnet,**
a) **dass** eine dritte der Zufuhrleitungen einlassseitig mit einem dritten Fluidbehälter, enthaltend ein Oxidationsgas, verbunden ist; und
b) **dass** eine vierte der Zufuhrleitungen einlassseitig mit einem vierten Fluidbehälter, enthaltend ein Reaktivgas oder ein Inertgas, verbunden ist.

7. Aerosolgenerator nach einem der vorhergehenden Ansprüche, **gekennzeichnet durch** ein Reguliermittel, mittels dessen eine Fluiddurchflussrate in jeder der Zufuhrleitungen einstellbar ist.

8. Verfahren zum Erzeugen eines Aerosols insbesondere ein Verfahren zum Erzeugen von Ruß, bei dem mittels eines Aerosolgenerators nach einem der vorhergehenden Ansprüche mindestens ein Brennstoff und ein Oxidationsmittel einem Brennraum zugeführt werden und im Brennraum eine Rußpartikel erzeugenden Flamme, insbesondere eine Diffusionsflamme, gebildet wird.

9. Verfahren nach Anspruch 8, **dadurch gekennzeichnet, dass** mittels eines Aerosolgenerators nach Anspruch 4 mindestens zwei Brenngase, mindestens ein Oxidationsgas und mindestens ein Reaktivgas oder Inertgas in dem Brennraum eingeleitet werden.

10. Verfahren zum Überprüfen oder Eichen eines Partikelmessgeräts, Partikelsensors, Partikelfilters oder Partikelkatalysators, **dadurch gekennzeichnet, dass** zum Überprüfen oder Eichen einer solchen Vorrichtung ein Aerosolgenerator nach einem der Ansprüche 1 bis 7 verwendet wird, um ein Aerosol, insbesondere Rußpartikel, zu erzeugen, und das durch den Aerosolgenerator erzeugte Aerosol der Vorrichtung zugeführt wird.

## Claims

1. An aerosol generator, preferably a soot generator, comprising
a combustion chamber in which fuel can be burnt with an oxidising agent in at least one soot particle-generating flame;
a fluid supply device for supplying fuel and an oxidising agent into the combustion chamber, wherein the fluid supply device comprises at least three supply lines whose end portions extend in parallel, so that at least three different types of fluids, preferably gases, can be introduced into the combustion chamber unmixed and in a parallel inflow direction, wherein a first of the supply lines is connected on the inlet side to a first fluid container containing a first fuel, preferably a first fuel gas; and
**characterised in that** a second of the feed lines is connected on the inlet side to a second fluid container containing a second fuel, preferably a second fuel gas.

2. Aerosol generator according to claim 1, **characterised in that** the end portions of at least three feed lines are arranged coaxially one inside the other

3. Aerosol generator according to claim 1, **characterised in**
a) **that** the end portions are arranged parallel to one another; and/or
b) **that** the end portions are arranged parallel next to one another with the configuration of a line arrangement with the greatest possible packing density.

4. Aerosol generator according to one of the preceding claims, **characterised in**
a) **that** the fluid supply device comprises at least four supply lines; or
b) **that** the fluid supply device comprises four supply lines; or
c) **that** the fluid supply device comprises seven supply lines.

5. Aerosol generator according to one of the preceding claims, **characterised in that** the outlets of the supply line are located at the same height with respect to the inflow direction.

6. Aerosol generator according to one of the preceding claims, **characterised in**
a) **that** a third of the feed lines is connected on the inlet side to a third fluid container containing an oxidising gas; and
b) **that** a fourth of the supply lines is connected on the inlet side to a fourth fluid container containing a reactive gas or an inert gas.

7. Aerosol generator according to any of the preceding claims, **characterised by** a regulating means by means of which a fluid flow rate in each of the supply lines is adjustable.

8. Method for generating an aerosol, preferably a method for generating soot, in which at least one fuel and one oxidising agent are supplied to a combustion chamber by means of an aerosol generator according to one of the preceding claims and a flame generating soot particles, preferably a diffusion flame, is formed in the combustion chamber.

9. Method according to claim 8, **characterised in that** at least two combustion gases, at least one oxidising gas and at least one reactive gas or inert gas are introduced into the combustion chamber by means of an aerosol generator according to claim 4.

10. Method for checking or calibrating a particle measurement device, particle sensor, particle filter, or particle catalyst, **characterized in that** an aerosol generator according to one of claims 1 to 7 is used for checking or calibrating such a device in order to generate an aerosol, preferably soot particles, and wherein the aerosol generated by the aerosol generator is supplied to the device.

## Revendications

1. Générateur d'aérosol, notamment générateur de noir de carbone, comprenant
une chambre de combustion dans laquelle un combustible peut être brûlé avec un oxydant dans au moins une flamme produisant des particules de noir de carbone ;
un appareil d'amenée de fluide pour l'amenée de combustible et d'un oxydant dans la chambre de combustion, l'appareil d'amenée de fluide présentant au moins trois conduites d'amenée dont les sections d'extrémité s'étendent parallèlement, de telle sorte qu'au moins trois fluides différents, notamment des gaz, peuvent être introduits dans la chambre de combustion sans être mélangés et dans une direction d'entrée parallèle, une première des conduites d'amenée étant reliée côté entrée à un premier réservoir de fluide, contenant un premier combustible, notamment un premier gaz combustible ; et
**caractérisé en ce qu'**une deuxième des conduites d'amenée est reliée côté entrée à un deuxième réservoir de fluide contenant un deuxième combustible, notamment un deuxième gaz combustible.

2. Générateur d'aérosol selon la revendication 1, **caractérisé en ce que** les sections d'extrémité d'au moins trois conduites d'amenée sont agencées coaxialement les unes dans les autres.

3. Générateur d'aérosol selon la revendication 1, **caractérisé en ce que**
a) les sections d'extrémité sont agencées parallèlement les unes à côté des autres ; et/ou
b) les sections d'extrémité sont agencées parallèlement les unes à côté des autres en réalisant un agencement de conduites avec une densité d'empaquetage la plus grande possible.

4. Générateur d'aérosol selon l'une quelconque des revendications précédentes, **caractérisé en ce que**
a) l'appareil d'amenée de fluide présente au moins quatre conduites d'amenée ; ou
b) l'appareil d'amenée de fluide présente quatre conduites d'amenée ; ou
c) l'appareil d'amenée de fluide présente sept conduites d'amenée.

5. Générateur d'aérosol selon l'une quelconque des revendications précédentes, **caractérisé en ce que** les sorties de la conduite d'amenée se trouvent à la même hauteur par rapport à la direction de l'écoulement.

6. Générateur d'aérosol selon l'une quelconque des revendications précédentes, **caractérisé en ce que**
a) une troisième des conduites d'amenée est reliée côté entrée à un troisième réservoir de fluide contenant un gaz oxydant ; et
b) une quatrième des conduites d'amenée est reliée côté entrée à un quatrième réservoir de fluide contenant un gaz réactif ou un gaz inerte.

7. Générateur d'aérosol selon l'une quelconque des revendications précédentes, **caractérisé par** un moyen de régulation au moyen duquel un débit de fluide dans chacun des conduites d'amenée peut être réglé.

8. Procédé de production d'un aérosol, notamment procédé de production de noir de carbone, dans lequel au moins un combustible et un oxydant sont amenés à une chambre de combustion au moyen d'un générateur d'aérosol selon l'une quelconque des revendications précédentes et une flamme produisant des particules de noir de carbone, notamment une flamme de diffusion, est formée dans la chambre de combustion.

9. Procédé selon la revendication 8, **caractérisé en ce qu'**au moyen d'un générateur d'aérosol selon la revendication 4, au moins deux gaz combustibles, au moins un gaz oxydant et au moins un gaz réactif ou un gaz inerte sont introduits dans la chambre de combustion.

10. Procédé de contrôle ou d'étalonnage d'un appareil de mesure de particules, d'un capteur de particules, d'un filtre à particules ou d'un catalyseur à particules, **caractérisé en ce que**, pour le contrôle ou l'étalonnage d'un tel dispositif, un générateur d'aérosol selon l'une quelconque des revendications 1 à 7 est utilisé pour produire un aérosol, notamment des particules de noir de carbone, et l'aérosol produit par le générateur d'aérosol est amené au dispositif.
